Europäisches Patentamt

European Patent Office

Office européen des brevets

(19)

(11) Veröffentlichungsnummer: **0 024 250**

**A1**

(12) ## EUROPÄISCHE PATENTANMELDUNG

(21) Anmeldenummer: 80630011.7

(22) Anmeldetag: 28.04.80

(51) Int. Cl.³: **B 29 H 19/00**
C 10 J 3/08, C 10 B 53/00

(30) Priorität: 14.08.79 LU 81606

(43) Veröffentlichungstag der Anmeldung:
25.02.81 Patentblatt 81/8

(84) Benannte Vertragsstaaten:
BE DE FR GB IT NL SE

(71) Anmelder: ARBED S.A.
Avenue de la Liberté
Luxembourg(LU)

(72) Erfinder: Metz, Paul
18 Rue J.P.Brasseur
Luxemburg(LU)

(72) Erfinder: Weiner, Antoine
104, Rue de Luxembourg
Esch/Alzette(LU)

(74) Vertreter: Neyen, René
Administration Centrale de l'Arbed Case postale 1802
Luxembourg(LU)

(54) **Verfahren und Einrichtung zur Wiederverwertung kohlenstoffreicher Abfälle.**

(57) Zur sinnvollen Wiederverwertung kohlenstoffreicher Abfallprodukte, insbesondere von Altreifen, wird ein Verfahren vorgeschlagen, das vorsieht, die Reifen thermisch zu zersetzen. Man trägt die Altreifen unzerkleinert in ein flüssiges Metallbad ein, das mit einer basischen Schlackenschicht bedeckt ist, welche zum Auffangen des Schwefels dient. Die entstehenden Gase dienen als Heizgase. Das Bad wird geheizt durch kontinuierliche oder intermittierende Zugabe von Sauerstoff oder angreicherter Luft, durch Auf- oder Einblasen. Es wird gleichzeitig mit Kreislaufgas durch einen Bodenblasstein durchspült.

Die Stahldrahtbewehrungen, die im konventionellen Pyrolyseverfahren stören, schmelzen im Metallbad.

Die erforderlich Enrichtung ist ein metallurgisches Gefäss (10) mit Eingangs-Gasschleuse (41), Abzug (70). Auf- bzw. Enblaslanze (1, 2) sowie Blasstein (3). Eine Sperrwand (13) schützt die Aufblaslanze (1).

FIG.1

EP 0 024 250 A1

0024250

Die vorliegende Erfindung betrifft ein Verfahren und eine Einrichtung zur Wiederverwertung von kohlenstoffreichen Abfallprodukten, insbesondere von Fahrzeugreifen.

Kohlenstoffreiche Abfallprodukte stellen in den industrialisierten Ländern Umweltprobleme dar, denen man mittels direkter und indirekter Wiederverwertungsmethoden beizukommen versucht.

So wird bspw. versucht, abgenutzte Fahrzeugreifen direkt wieder zu verwerten, indem man sie in Dämmen und Wellenbrechern als Prallblöcke, im Strassenbau als Untergrund oder im Eisenbahnbau als Schwellenunterlage verwendet. Es wurde sogar vorgeschlagen, Fahrzeugreifen in Unterwasserfarmen als Laichplätze für die Fischzucht zu verwenden.

Das Zurückgreifen auf derartige Ideen erklärt sich aus den Schwierigkeiten, auf die man bei Versuchen der indirekten Wiederverwertung stösst, bei der Anwendung von Methoden also die auf die Verwertung des in Fahrzeugreifen enthaltenen Kohlenstoffes abzielen.

Die bekannteste und ausgereifteste Methode in dieser Optik ist die Pyrolyse; eine unvollständige Verbrennung, die im vorliegenden Fall zum Kracken der C-C-Bindungen des vulkanisierten Polyisoprens führt,wobei gasförmige und flüssige organische Verbindungen entstehen. Meist versucht man, die Pyrolyse so zu steuern, dass die Menge der entstandenen Gase gerade ausreicht um den Energiebedarf des Prozesses selbst zu decken und dass als Hauptprodukt flüssige Substanzen entstehen die man als Brennstoffe insbesondere als Heizöle einsetzen kann.

Obwohl derartige Pyrolyseverfahren vom Standpunkt der Energiezufuhr gesehen praktisch autonom sind, bleiben Probleme bestehen die sich ungünstig auf die Kosten der so gewonnenen Heizöle niederschlagen. In der Tat benötigt man zum Steuern eines jedes Pyrolyseprozesses eine komplexe und teuere Apparatur, da die unvollständige Verbrennung nur durch eine exakte Regelung der Luftzufuhr und der Temperaturen im gewünschten Sinne abläuft. Weiter ist die Anschaffung,der Betrieb und der Unterhalt einer komplizierten Gasreinigungsanlage notwendig, da die Fahrzeugreifen Schwefel enthalten. Ferner muss eine Anlage zum Destillieren der gewonnenen Oele erworben, betrieben und gewartet werden.

BAD ORIGINAL

Jedes Pyrolyseverfahren setzt voraus, dass die zu behandelnden Stoffe in einem möglichst fragmentierten Zustand vorliegen; Feststoffe müssen zerkleinert und Flüssigkeiten vernebelt werden. Gerade im Fall von Fahrzeugreifen stellt das Zerkleinern ein schwerwiegendes Problem dar, da Gummi sich nicht leicht schneiden lässt. Eine zusätzliche Schwierigkeit entsteht durch den Umstand dass verschiedene Reifen Stahldrahteinlagen aufweisen und andere nicht, so dass man selektive teure und umständliche Zerkleinerungsverfahren durchführen muss.

Zudem kommt, dass man die Pyrolyse öfters unterbrechen muss, um den Reaktor von den Stahldrähten zu befreien, die sich im Lauf der Zeit darin anhäufen. Die Stahldrähte werden innerhalb des Pyrolyseprozesses unproduktiv aufgeheizt und verschlechtern hierdurch die Energiebilanz.

Das Ziel der Erfindung besteht demnach darin, ein Verfahren das die angeführten Probleme vermeidet, sowie eine zu dessen Durchführung geeignete Einrichtung vorzuschlagen.

Dieses Ziel wird erreicht durch das erfindungsgemässe Verfahren, das vorsieht die Abfallprodukte thermisch zu zersetzen und dessen Merkmale darin bestehen, dass man die Abfallprodukte im Urzustand in ein flüssiges Metallbad einführt das mit einer basischen Schlackenschicht bedeckt ist, dass man die gebildeten kohlenstoffhaltigen Gase sammelt und die in den Abfallprodukten enthaltenen Verunreinigungen vornehmlich den Schwefel, in der Schlackenschicht abfängt.

Erfindungsgemäss handelt es sich bei dem Metallbad um ein Eisenbad, das mit einer vornehmlich aus Kalk bestehenden Schlacke bedeckt ist.

Der Grundgedanke der Erfindung besteht darin, dass eine thermische Zersetzung innerhalb eines homogenen flüssigen Mediums besser vonstatten geht als dies in einem Pyrolysereaktor der Fall ist und dass sich als ein solches Medium in Ermangelung geeigneter organischer Lösungsmittel Metallbäder anbieten. Hat man einmal Metallbäder als thermische Zersetzungsmedien gewählt, so bietet sich gleichzeitig die Technologie der reinigenden Schlacken mit einstellbarem Basizitätsgrad als wichtiges Hilfsmittel in der vorliegenden Problematik an.

BAD ORIGINAL

Die durch den Kontakt mit flüssigem Eisen bewirkte thermische Zersetzung von Altreifen löst auf besonders einfache und elegante Art das Problem der in vielen Reifenarten vorhandenen Stahldrahtbewehrungen, die bei der Durchführung des erfindungsgemässen Verfahrens geschmolzen werden und deshalb, anders als in konventionellen Pyrolyseverfahren, nicht weiter stören.

Zum Einbringen der Altreifen in das Metallbad ordnet man diese erfindungsgemäss in Form einer Kolonne über dem Metallbad an. Hierdurch erreicht man einerseits, dass die Reihen allein infolge ihrer Schwerkraft in das Bad eingebracht werden, ohne dass man also besondere Mittel, wie Lanzen und dgl. vorsehen müsste, die übrigens eine zumindest teilweise Zerkleinerung der Altreifen voraussetzen würden. Andererseits heizt man die über dem Metallbad angeordnete Kolonne von Altreifen vor da sie der fühlbaren Wärme der bei der erfindungsgemässen Zersetzung entstehenden Gase, die durch besagte Kolonne streichen, ausgesetzt sind.

Erfindungsgemäss führt man dem Metallbad die notwendige Wärmeenergie zu indem man kontinuierlich oder intermittierend eine ausreichende Menge an Sauerstoff oder mit Sauerstoff angereicherte Luft zugibt.

Eine erste Ausführungsform besteht darin, dass man im wesentlichen reinen Sauerstoff auf die Badoberfläche bläst. Hierbei kann man dem durch eine Lanze eingebrachten Blassauerstoff den basischen Schlackenbildner zusetzen.

Man kann alternativ vorsehen reinen Sauerstoff allein aufzublasen und den Schlackenbildner zusammen mit den Abfallprodukten in das Metallbad einzubringen.

Während das Sauerstoff-Kalk-Aufblasverfahren eine besonders günstige Wirkung im Hinblick auf ein homogenes Behandeln des Bades hervorruft, kann im Aufblasen von reinem Sauerstoff allein, eine Vereinfachung der Konstruktion der notwendigen Aufblaslanze gesehen werden.

Eine weitere Ausführungsform des erfindungsgemässen Verfahrens sieht vor, reinen Sauerstoff oder mit Sauerstoff angereicherte Luft unter die Badoberfläche einzublasen.

Sei es dass man die eine oder die andere Sauerstoffzufuhrmethode bevorzugt so ist es erfindungsgemäss vorgesehen, dass man Luft, mit Sauerstoff angereicherte Luft oder Kreislaufgas durch zumindest einen Blasstein in das Metallbad einbläst. Diese Massnahme dient zum Homogenisieren des Metallbades, insbesondere in thermischer Hinsicht.

Die zur Durchführung des erfindungsgemässen Verfahrens notwendige Einrichtung begreift im wesentlichen ein geschlossenes metallurgisches Gefäss (10) das mit einem mit einer Eingangs-Gasschleuse (41) und einem Gasabzug (70) versehenen Kamin (40) ausgerüstet ist, wobei der Gasabzug (70) unmittelbar unter der Eingangs-Gasschleuse (41) angeordnet ist.

Das metallurgische Gefäss ist nach einer ersten Ausführungsform mit zumindest einer Sauerstoff-Kalk-Aufblaslanze ausgerüstet.

In diesem Fall weist das Gefäss erfindungsgemäss eine Sperrwand auf, die ein ungestörtes Aufblasen von Sauerstoff auf die Badoberfläche gestattet.

Alternativ kann das Gefäss mit zumindest einer Sauerstoff- bzw. Sauerstoff-Luft-Einblaslanze versehen sein.

Jedenfalls ist das Gefäss insbesondere zur Aufrechterhaltung der thermischen Homogenität des Bades mit zumindest einem Blasstein versehen durch den Luft oder Kreislaufgas in das Bad eingeführt werden können.

Das Durchspülen des Metallbades mit Luft oder mit Kreislaufgas stellt überdies eine Massnahme dar, die eine Nachverbrennung des beim Aufblasen von Sauerstoff entstehenden Kohlenmonoxyds bewirkt. Hierdurch werden in unmittelbarer Nähe des Badspiegels und demnach der zu pyrolysierenden Altreifen beträchtliche Mengen an Wärme freigesetzt.

Man steuert die Sauerstoffzugabe derart, dass einerseits genügend Wärme entwickelt wird um das Bad selbst flüssig zu erhalten und dass andererseits ein möglichst geringer Sauerstoffüberschuss im Abgas anfällt und zwar um dem Entstehen explosiver Gase vorzubeugen.

Da es sich beim erfindungsgemässen Verfahren um eine Pyrolysereaktion handelt deren Medium extrem heiss ist, kommt es zu einem intensiven Kracken der organischen Ketten, bei dem durchwegs niedrigmolekulare Krackprodukte entstehen.

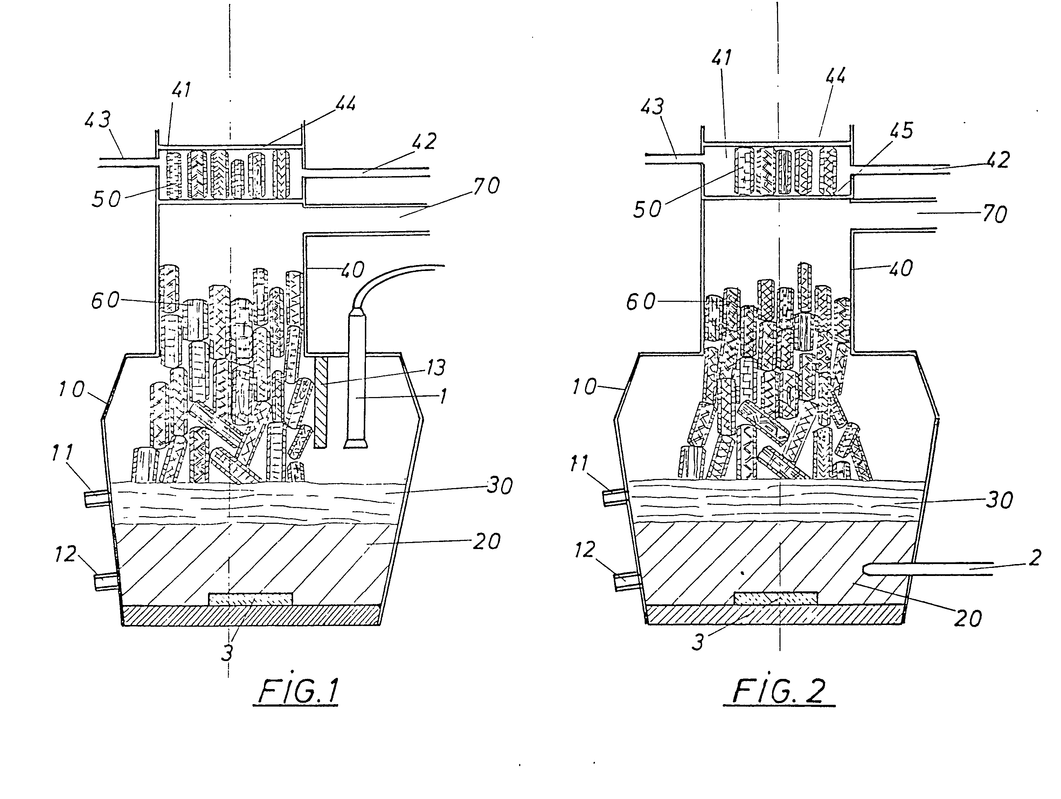

Zur nicht einschränkenden Veranschaulichung von zwei Ausführungsformen der erfindungsgemässen Einrichtung dienen die schematischen Zeichnungen in denen Fig. 1 einen Schnitt durch eine nach dem Aufblasverfahren arbeitende und Fig. 2 eine nach dem Einblasverfahren arbeitende Anlage darstellen.

Man erkennt das metallurgische Gefäss (10), das in Fig. 1 mit einer Aufblaslanze (1) und in Fig. 2 mit einer Eintauchlanze (2) ausgerüstet ist. Weiter ekennt man den Blasstein (3). Das Gefäss (10) weist weiter das Abstichloch (11) für die Schlacken und jenes (12) für das Metall auf.

Im Gefäss (10) befindet sich das Metallbad (20) und die hierauf schwimmende Schlackenschicht (30).

Ueber dem Gefäss (10) ist der Kamin (40) angeordnet, der mit einer Eingangs-Gasschleuse (41) ausgerüstet ist. Letztere enthält die Luftzufuhrleitung (42), sowie die Gasabfuhrleitung (43). Die Absperrungen (44 und 45) ermöglichen das Einbringen der Abfallreifen (50) in die Schleuse (41) von wo aus sie sich zu einer Kolonne (60) türmen, die in das Bad (20, 30) eintaucht.

In Fig. 1 wird gezeigt, dass der Raum über der Schlakkenschicht (30) in zwei Teile getrennt ist. Die Sperrwand (13) ermöglicht ein ungestörtes Aufblasen von Sauerstoff mit Kalk auf die Badoberfläche. Die Uebertragung der Wärme wird durch das durch den Blasstein (3) eingeblasene Gas unterstützt.

Der Gasabzug (70) befindet sich gemäss dem sinnreichen Vorwärmen der thermisch zu zersetzenden Abfallprodukte möglichst nahe bei der Einführungsschleuse.

0024250

## Patentansprüche

1) Verfahren zur Wiederverwertung von kohlenstoffreichen Abfallprodukten, insbesondere von Fahrzeugreifen, das vorsieht diese thermisch zu zersetzen, dadurch gekennzeichnet, dass man die Abfallprodukte im Urzustand in ein flüssiges Metallbad einführt das mit einer basischen Schlackenschicht bedeckt ist, dass man die bei der Zersetzung gebildeten kohlenstoffhaltigen Gase sammelt und die in den Abfallprodukten enthaltenen Verunreinigungen, vornehmlich den Schwefel, in der basischen Schlackenschicht abfängt.

2) Verfahren nach dem Anspruch 1, dadurch gekennzeichnet, dass das Metallbad ein Eisenbad ist.

3) Verfahren nach den Ansprüchen 1-2, dadurch gekennzeichnet, dass die Schlacke vornehmlich aus Kalk besteht.

4) Verfahren nach den Ansprüchen 1-3, dadurch gekennzeichnet, dass man die Abfallprodukte in Form einer Kolonne über dem Metallbad anordnet, die in das Bad eintaucht.

5) Verfahren nach den Ansprüchen 1-4, dadurch gekennzeichnet, dass man die bei der thermischen Zersetzung gebildeten heissen Gase über die in Form einer Kolonne über dem Metallbad angeordneten Abfallprodukte leitet.

6) Verfahren nach den Ansprüchen 1-5, dadurch gekennzeichnet, dass man das Metallbad durch kontinuierliche oder intermittierende Zugabe von Sauerstoff oder von mit Sauerstoff angereicherter Luft heizt.

7) Verfahren nach den Ansprüchen 1-6, dadurch gekennzeichnet, dass man reinen Sauerstoff auf die Oberfläche des Metallbades bläst.

8) Verfahren nach den Ansprüchen 1-7, dadurch gekennzeichnet, dass man dem Blassauerstoff den basischen Schlackenbildner zusetzt.

9) Verfahren nach den Ansprüchen 1-8, dadurch gekennzeichnet, dass man den basischen Schlackenbildner zusammen mit den Abfallprodukten in das Metallbad einführt.

10) Verfahren nach den Ansprüchen 1-6 und 9, dadurch gekennzeichnet, dass man reinen Sauerstoff bzw. mit Sauerstoff angereicherte Luft unter die Oberfläche des Metallbades einbläst.

11) Verfahren nach den Ansprüchen 1-10, dadurch gekennzeichnet, dass man Luft, mit Sauerstoff angereicherte Luft oder Kreislaufgas durch zumindest einen Blasstein in das Metallbad einbläst.

12) Einrichtung zur Durchführung des Verfahrens nach den Ansprüchen 1-11, dadurch gekennzeichnet, dass sie ein geschlossenes metallurgisches Gefäss (10) begreift, das mit einem mit einer Eingangs-Gasschleuse (41) und einem Gasabzug (70) versehenen Kamin ausgerüstet ist, wobei der Gasabzug (70) unmittelbar unter der Eingangs-Gasschleuse angeordnet ist.

Einrichtung nach dem Anspruch 12, dadurch gekennzeichnet, dass das metallurgische Gefäss mit zumindest einer Sauerstoff-Kalk-Aufblaslanze ausgerüstet ist.

14) Einrichtung nach dem Anspruch 13, dadurch gekennzeichnet, dass das Gefäss eine Sperrwand aufweist, die die Aufblaslanze von dem Raum trennt in welchem sich die Kolonne aus Altreifen befindet.

15) Einrichtung nach dem Anspruch 12, dadurch gekennzeichnet, dass das metallurgische Gefäss mit zumindest einer Sauerstoff-Einblaslanze ausgerüstet ist.

16) Einrichtung nach den Ansprüchen 12-15, dadurch gekennzeichnet, dass das metallurgische Gefäss mit zumindest einem Blasstein ausgerüstet ist.

FIG.1

FIG.2

Europäisches
Patentamt

## EUROPÄISCHER RECHERCHENBERICHT

| Kategorie | EINSCHLÄGIGE DOKUMENTE | | KLASSIFIKATION DER ANMELDUNG (Int Cl.³) |
|---|---|---|---|
| | Kennzeichnung des Dokuments mit Angabe, soweit erforderlich, der maßgeblichen Teile | betrifft Anspruch | |
| | DE – A – 2 219 227 (SCHMID) <br> * Seiten 1 und 2 * <br> -- | 1 | B 29 H 19/00 <br> C 10 J 3/08 <br> C 10 B 53/00 |
| | DE – A – 2 750 725 (KLOCKNER-HUMBOLDT-DEUTZ) <br> * Seite 1, Patentansprüche 1-4; <br> Seite 2, Patentansprüche 5-7; <br> Seite 4, Patentanspruch 17; <br> Seiten 16-19 * <br> -- | 1,2,3, 6,9, 10,11 | |
| | DE – A – 1 915 248 (BLACK) <br> * Seiten 16-17; Patentansprüche 1-5 * <br> -- | 1,2,3, 6,10 | RECHERCHIERTE SACHGEBIETE (Int. Cl.³) <br><br> B 29 H 19/00 <br> C 10 J 3/08 <br> C 10 B 53/00 <br> C 10 B 49/14 |
| P | US – A – 4 187 672 (RASOR) <br> * Spalte 5, Zeilen 20-69; Spalte 6, Zeilen 1-69; Spalten 7-10; Spalte 11, Zeilen 1-6 * <br> -- | 1-4,6, 7,9, 10,12, 14 | |
| A | DE – B – 2 304 369 (MANNESMANN) | | |
| A | FR – A – 2 310 401 (EISENWERK-GES.) <br> & DE 2 520 584 | | KATEGORIE DER GENANNTEN DOKUMENTE |
| A | DE – A – 1 955 115 (BLACK) | | X: von besonderer Bedeutung <br> A: technologischer Hintergrund <br> O: nichtschriftliche Offenbarung |
| A. | DE – A – 2 620 454 (KLOCKNER-HUMBOLDT) <br><br> ---- | | P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 06-11-1980 | WENDLING. |

EPA form 1503.1   06.78